Europäisches Patentamt

European Patent Office

Office européen des brevets

(19)

(11) Publication number : **0 375 189 B1**

# (12) EUROPEAN PATENT SPECIFICATION

(45) Date of publication of patent specification :
**11.11.92 Bulletin 92/46**

(51) Int. Cl.⁵ : **B62B 9/24,** B62B 7/08,
A47D 15/00

(21) Application number : **89312551.8**

(22) Date of filing : **01.12.89**

(54) **Infant chair attachment.**

(30) Priority : **22.12.88 GB 8830037**

(43) Date of publication of application :
**27.06.90 Bulletin 90/26**

(45) Publication of the grant of the patent :
**11.11.92 Bulletin 92/46**

(84) Designated Contracting States :
**DE ES FR GB IT**

(56) References cited :
**EP-A- 0 193 729**
**EP-A- 0 256 495**
**GB-A- 1 015 817**
**GB-A- 2 160 094**

(73) Proprietor : **BRITAX RESTMOR LIMITED**
**Restmor Way Hackbridge Road**
**Wallington Surrey SM6 7AQ (GB)**

(72) Inventor : **Osborn, David Richard**
**32, Trinity Road Stotfold**
**Hitchin Herts. SG35 4EG (GB)**
Inventor : **Lightburn, Joseph Keith**
**122, Ampthill Road**
**Shefford Beds. (GB)**

(74) Representative : **Hollinghurst, Antony**
**B.S.G. International plc Patent Department**
**Castle Trading Estate East Street**
**Portchester, Hampshire PO16 9SD (GB)**

## Description

This invention relates to a chair such as an infant's chair having an attachment of the type comprising a component adapted to extend across the front of the chair and to be pivotable upwardly, the attachment including a side arm adapted to plug into a socket mounted on one side of the chair. An attachment of this type, applied to the provision of a detachable table for a nursery chair, is disclosed in GB-A-1015817.

With any device involving moving parts which are used within reach of an infant, it is necessary to ensure that the infant's fingers cannot be trapped as the parts move. This invention aims to provide an attachment of the foregoing type in which movement of the attachment between its various positions cannot trap the fingers of an infant.

According to the invention, in a chair of the foregoing type, the socket comprises a static part secured to the chair and a rotary part secured for angular movement relative to the static part about a pivot axis such as to enable the attachment to move from its position in front of the chair to a raised position in which the attachment can be detached from the chair, the rotary part having a recess adapted to receive the end of 'the side arm and the static part having an arcuate channel with a radial section arranged to receive a detent projection on the side arm so that the side arm can be removed from the socket only when the detent protection is in alignment with the radial section of the arcuate channel.

The invention is particularly, but not exclusively, applicable to push chairs, in which case the attachment may take the form of a padded guard bar of the type sometimes called a "bumper bar".

An embodiment of the invention, will now be described, by way of example, with reference to the accompanying drawings in which:

Figure 1 is a perspective view of a push chair having a guard in accordance with the invention and with the seat of the push chair facing forwards;

Figure 2 is a side view of the push chair shown in Figure 1;

Figure 3 is a side view, similar to Figure 2 but with the guard bar folded upwards;

Figure 4 is a side view, similar to Figures 2 and 3 but with the seat facing rearwards;

Figure 5 is an exploded perspective view of the components of a mounting assembly for the guard shown in Figures 1 to 4;

Figure 6 is an elevation of one of the components of the assembly shown in Figure 5.

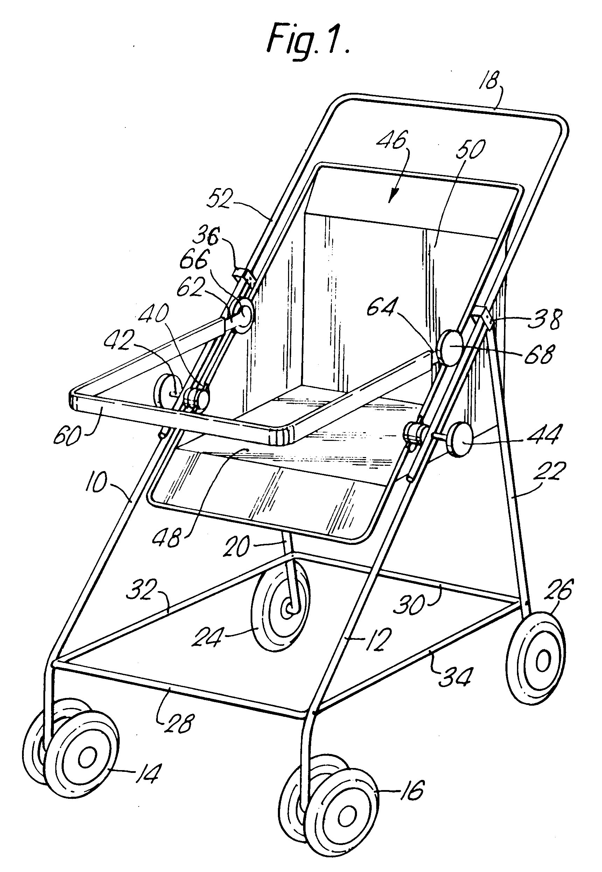

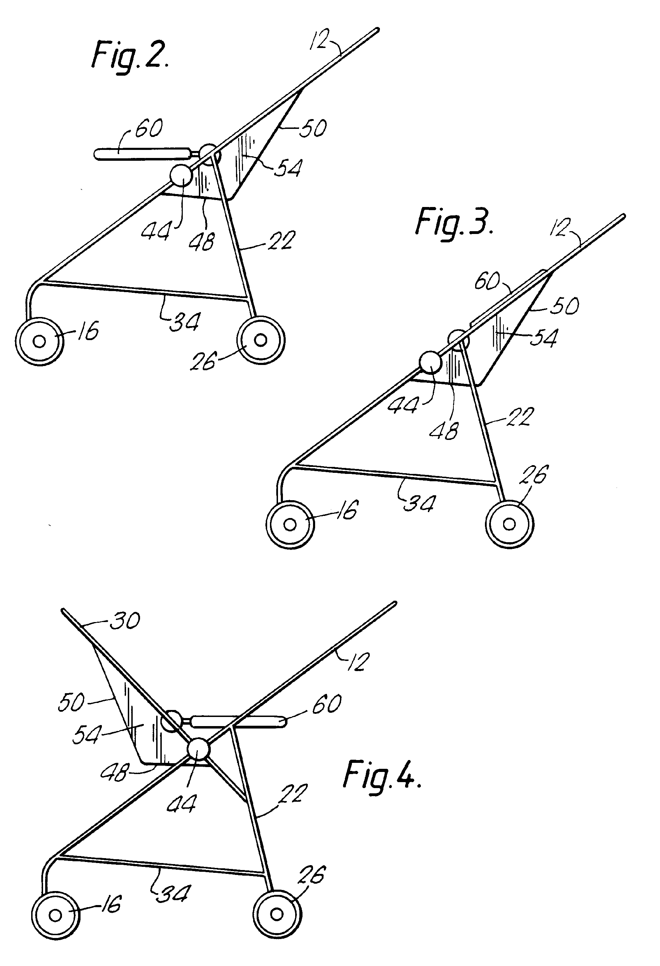

Figures 1 and 2 show a push chair having a frame comprising front legs 10 and 12 having front wheels 14 and 16. A U-shaped handle 18 has the ends of its limbs pivotally secured to respective front legs somewhat below the upper ends of the latter. The upper ends of rear legs 20 and 22 are pivotally attached to the handle 18 and have rear wheels 24 and 26 on their lower ends. A horizontal front member 28 interconnects the front legs 10 and 12 and a similar rear member 30 interconnects the rear legs 20 and 22 near their lower ends. A side member 32 has one end pivotally attached to the front leg 10 and its other end pivotally attached to the rear leg 20. Another side member 34 is similarly pivotally attached to the front and rear legs 12 and 22 on the other side of the push chair frame. The push chair frame can be folded flat by pivoting the handle 18 forwardly and downwardly towards the front wheels 14 and 16, inadvertent folding movement being prevented by catches 36 and 38 which detachably secure the tops of the front legs 10 and 12 to the adjacent parts of the handle 18. Folding push chair frames of this type are well known.

A rectangular seat frame 40 is mounted between the front legs 10 and 12 by respective clamping pivot assemblies 42 and 44. These clamping pivot assemblies may be as described in our co-pending Patent Application No 8726888 (GB-A-2212555). A flexible fabric seat body 46 is suspended from the frame 40 and includes a seat portion 48, a backrest portion 50 and side panels 52 and 54.

The fabric seat body 46 is reversible so that the seat frame 40 can be pivoted about the pivot joints 42 and 44 to a rearward facing position and the fabric seat body 46 pushed through the frame to take up the position illustrated in Figure 4. The seat frame 40 can further pivot to a horizontal position (not shown) in which an infant can sleep comfortably.

In accordance with the invention, the seat has a guard, in the form of a U-shaped bar 60 having foam padding on most of its length and its exposed ends 62 and 64 engaging in respective pivoting socket assemblies 66 and 68 secured to opposite sides of the rectangular seat frame 40. The two socket assemblies are mirror images of each other about the longitudinal central plane of the seat.

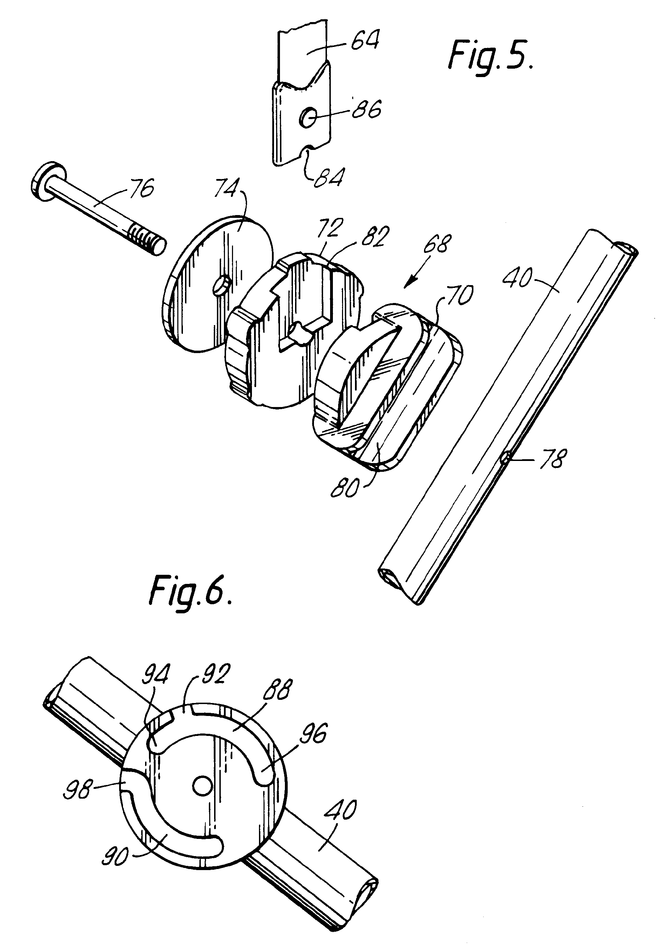

As shown in Figures 5 and 6, the socket assembly 68 on the left hand side of the seat (as viewed by an adult holding the handle 18) comprises a static plastics moulding 70, a rotary plastics moulding 72, a washer 74 and a bolt 76 which extends through central holes in the component 70, 72 and 74 into a tapped hole 78 in the rectangular seat seat frame 40. The static moulding 70 has a channel formation 80 shaped to engage around the seat frame 40 so as to prevent relative rotation. The rotary moulding 72 has a rectangular recess 82 shaped to receive the end 64 of the guard bar 60, the latter having a semicircular cut-out 84 in its end edge arranged to engage around the bolt 76.

The end 64 of the guard bar 60 also has a stud 86 on the side facing the static moulding 70. As can be seen from Figure 6, the static moulding 70 has first and second arcuate grooves 88 and 90 on its face which abuts against the rotary moulding 72. The first arcuate groove 88 is on the forward facing side of the seat frame 40 when in the orientation shown in Figures 1 and 2, has a radial groove 92 leading outwardly a short distance from its upper end 94. When the seat frame 40 is in this orientation, the end 64 of the guard bar can be inserted into the recess 82, the stud 86 moving along the radial groove 92 into the first arcuate groove 88. When the semicircular cut-out 84 abuts against the bolt 76, the bar end 64 can pivot thereabout, the stud 86 moving along the arcuate groove 88 to the horizontal position illustrated in Figures 1 and 2, when the stud 86 abuts against the lower end 96 of the groove 88. Alternatively, the stud 86 can move in the opposite direction to the upper end 94 of the arcuate slot 88, thus allowing the bar 60 to fold flat against the handle 18, as shown in Figure 3, preparatory to folding the handle 18 against the front wheels 14 and 16 as described above.

When the seat frame is in the position illustrated in Figure 4, the second arcuate groove 90 is on the side of the seat frame 40 facing away from the seat body. This arcuate groove also connects to an outwardly extending radial groove 98 which, unlike groove 92, is located at the upper end of the groove 90 (when the frame is in the position shown in Figure 4). If the end 64 of the guard bar 60 is now inserted into the recess 82, the guard bar 60 can pivot to the position shown in Figure 4, with the stud 86 at the lower end 90 of the slot 90.

Since the two mouldings 70 and 72 are circular, they do not have any surfaces between which an infant's fingers could be trapped.

## Claims

1. A chair (46) having an attachment (60) of the type comprising a component adapted to extend across the front of the chair (46) and to be pivotable upwardly, the attachment (60) including a side arm (62, 64) adapted to plug into a socket (66, 68) mounted on one side of the chair (46), characterised in that the socket (66, 68) comprises a static part (70) secured to the chair (46) and a rotary part (72) secured for angular movement relative to the static part (70) about a pivot axis (76) such as to enable the attachment (60) to move from its position in front of the chair (46) to a raised position in which the attachment (60) can be detached from the chair (46), the rotary part (72) having a recess (82) adapted to receive the end of the side arm (62, 64) and the static part (70) having an arcuate channel (88) with a radial section (92) arranged to receive a detent projection (86) on the side arm (62, 64) so that the side arm (62, 64) can be removed from the socket (66, 68) only when the detent projection (86) is in alignment with the radial section (92) of the arcuate channel (88).

2. A chair (60) according to claim 1, wherein the radial section (92) is located at a position between the ends (94, 96) of the arcuate channel (88).

3. A chair (60) according to claim 1 or 2, wherein the static part (70) has a second arcuate channel (90) with a radial section (98) arranged to receive the detent projection (86) on the side arm (62, 64) with the attachment (60) in an alternative position.

## Patentansprüche

1. Stuhl (46) mit einem Zusatzteil (60) der Art, die ein Bauteil enthält, welches sich quer über die Vorderseite des Stuhls (46) erstreckt und nach oben schwenkbar ist, wobei das Zusatzteil (60) einen Seitenarm (62, 64) enthält, der in eine an einer Seite des Stuhl gelagerte Fassung (66, 68) einsteckbar ist, dadurch **gekennzeichnet**, daß die Fassung (66, 68) ein an dem Stuhl fixiertes ruhendes Teil (70) und ein für eine Winkelbewegung bezüglich des ruhenden Teils auf einer Schwenkachse (76) gelagertes Drehteil (72) aufweist, so daß das Zusatzteil aus seiner Stellung auf der Vorderseite des Stuhls (46) in eine angehobene Stellung bewegbar ist, in der es von dem Stuhl (46) abnehmbar ist, daß das Drehteil (72) eine Ausnehmung (82) zur Aufnahme des Endes des Seitenarms (62, 64) aufweist und das ruhende Teil (70) einen bogenförmigen Kanal (88) mit einem radialen Abschnitt (92) zur Aufnahme eines Rastvorsprungs (86) an dem Seitenarm (62, 64) aufweist, so daß der Seitenarm (62, 64) nur dann aus der Fassung (66, 68) entfernbar ist, wenn der Rastvorsprung (86) mit dem radialen Abschnitt (92) des bogenförmigen Kanals (88) ausgerichtet ist.

2. Stuhl (60) nach Anspruch 1, bei dem der radiale Abschnitt (92) sich an einer Stelle zwischen den Enden (94, 96) des bogenförmigen Kanals (88) befindet.

3. Stuhl (60) nach Anspruch 1 oder 2, bei dem das ruhende Teil (70) einen zweiten bogenförmigen Kanal (90) mit einem radialen Abschnitt (98) zur Aufnahme des Rastvorsprunges (86) an dem Seitenarm (62, 64) bei dem in einer alternativen Stellung befindlichen Zusatzteil (60) aufweist.

## Revendications

1. Une chaise (46) munie d'un accessoire (60) du type comprenant un élément agencé pour s'étendre transversalement à l'avant de la chaise (46) et à pouvoir pivoter vers le haut, l'accessoire (60) comprenant un bras latéral (62, 64) agencé pour être enfiché dans un raccord de montage (66, 68) monté sur un côté du siège (46), caractérisé en ce que le raccord de montage (66, 68) comprend une partie statique (70) fixée à la chaise (46) et une partie rotative (72), fixée de manière à effectuer un déplacement angulaire par rapport à la partie statique (70) autour d'un axe de pivot (76), pour permettre le déplacement de l'accessoire (60) de sa position située en avant de la chaise (46) vers une position relevée dans laquelle l'accessoire (60) peut être démonté de la chaise (46), la partie rotative (72) comprenant une cavité (82) agencée pour recevoir l'extrémité du bras latéral (62, 64) et la partie statique (70) étant pourvue d'un canal incurvé (88) dont la section radiale (92) est agencée pour recevoir une saillie formant détente (86) du bras latéral (62, 64), de manière que le bras latéral (62, 64) ne puisse être enlevé du raccord de montage (66, 68) que lorsque la saillie formant détente (86) est dans l'alignement de la section radiale (92) du canal incurvé (88).

2. Une chaise (60) selon la revendication 1, dans lequel la section radiale (92) est située dans une position comprise entre les extrémités (94, 96) du canal incurvé (88).

3. Une chaise (60) selon la revendication 1 ou 2, dans lequel la partie statique (70) comprend un second canal incurvé (90), dont la section radiale (98) est agencée pour recevoir la saillie formant détente (86) du bras latéral (62, 64) lorsque l'accessoire (60) est en position alternée.

# Fig.1.

Fig.2.

Fig.3.

Fig.4.

Fig.5.

Fig.6.